# EUROPEAN PATENT SPECIFICATION

(11) **EP 2 813 445 B1**
(45) Date of publication and mention of the grant of the patent: **05.04.2017**
(21) Application number: 13171536.9
(22) Date of filing: 11.06.2013
(51) Int. Cl.: B65G 47/14, G01N 35/04

(54) **Apparatus and method for handling sample tubes and laboratory system**
Vorrichtung und Verfahren zur Handhabung von Probenröhrchen und Laborsystem
Appareil et procédé pour manipuler des tubes d'échantillons et système de laboratoire

(43) Date of publication of application: 17.12.2014
(73) Proprietor: Roche Diagnostics GmbH, 68305 Mannheim (DE); F. Hoffmann-La Roche AG, 4070 Basel (CH)
(72) Inventor: Lorenzen, Tom, 24629 Kisdorf (DE)
(74) Representative: Patentanwälte Ruff, Wilhelm, Beier, Dauster & Partner mbB

(56) References cited:
- EP-A2- 2 472 267
- WO-A1-2009/021266
- WO-A1-2009/092710

## Description

### Apparatus and method for handling sample tubes and laboratory system

The invention relates to an apparatus and a method for handling sample tubes and a laboratory system.

Laboratory sample distribution systems are used to distribute samples or specimens, e.g. blood samples, contained in sample tubes between various different laboratory stations or specimen-processing instruments, such as pre analytical stations, analytical stations and post analytical stations.

The sample tubes are typically supplied in a bulk commodity. To achieve an efficient handling the sample tubes have to be inserted into sample tube racks.

WO 2009/092710 A1 and EP 2 472 267 A2 respectively disclose an apparatus for handling sample tubes comprising a sample tube tray, a sample tube individualizer, a first conveyor, a second conveyor, a sample tube buffer and a sample tube rack inserter.

WO 2009/021266 A1 discloses an apparatus for handling sample tubes comprising a sample tube tray, a sample tube individualizer, a first conveyor, a sample tube rack inserter, a conveying direction determiner and a conveying direction changer functionally coupled to the conveying direction determiner and the first conveyor. The first conveyor comprises a belt with protrusions attached to it. The conveying direction changer comprises an actuator and a support device that can carry a sample tube, said actuator configured to rotate said support device. The support device is made up of two side members separated by an opening through which protrusions of the first conveyor can pass.

It is the object of the present invention to provide an apparatus and a method for handling sample tubes and a laboratory system being highly flexible and offering a high processing performance.

The invention solves this object by providing an apparatus for handling sample tubes according to claim 1, a laboratory system according to claim 11 and a method for handling sample tubes according to claim 12. Embodiments are subject of the sub claims.

The apparatus comprises a sample tube tray. The sample tube tray is adapted to store sample tubes in bulk commodity. The sample tube tray may form a well, wherein the sample tubes intended for processing may be filled or dumped into the sample tube tray in an unordered fashion. The sample tube tray may e.g. be dimensioned to store 50 to 500 sample tubes.

The apparatus further comprises a sample tube individualizer. The sample tube individualizer is adapted to sequentially unload single sample tubes comprised in the sample tube tray and to sequentially provide the unloaded sample tubes to a first conveyor. The sample tube individualizer may be adapted such that sample tubes filled into the sample tube tray are basically processed in a first-in-first-out scheme.

The first conveyor is adapted to sequentially convey the sample tubes provided by the sample tube individualizer to a sample tube buffer.

The sample tube buffer is adapted to buffer the sample tubes provided by the first conveyor and to provide buffered sample tubes to a second conveyor with a given, e.g. constant, sample tube rate. The sample tube buffer may e.g. have a buffer capacity of 5 to 20 sample tubes.

The second conveyor is adapted to convey the sample tubes to a sample tube rack inserter with the sample tube rate defined by the sample tube buffer.

The first and the second conveyor may have essentially horizontal conveying directions, and the tubes may be conveyed in any orientation, for example, in a horizontal or vertical position. In particular disclosed embodiments where the tubes are conveyed essentially horizontally, the tubes are conveyed in an essentially longitudinal orientation, such as along a direction defined by the long axis of the sample tubes.

The sample tube rack inserter is adapted to insert the sample tubes into a sample tube rack. The sample tube rack may be a conventional sample tube rack used in laboratory automation. In other embodiments, the sample tubes may be loaded into a sample puck for holding single sample tubes.

The sample tubes are conventionally closed by means of caps. The sample tubes are provided to the first conveyer such that the sample tubes are initially conveyed in a random conveying direction, namely being either cap first or cap last. To deal with this degree of freedom, the apparatus comprises a conveying direction determiner, adapted to determine the conveying direction of a respective sample tube. The apparatus further comprises a conveying direction changer functionally coupled to the conveying direction determiner and the first conveyor, wherein the conveying direction changer is adapted to change the conveying direction such that each sample tube is provided to the sample tube buffer in a defined conveying direction. The unified conveying direction simplifies the further processing of the sample tubes.

The first and/or second conveyor comprise a first and a second belt, the first and the second belt extending in parallel along a conveying direction and being spaced by a given belt distance. The belt distance is dimensioned such that a sample tube may be placed on the two belts in longitudinal direction. The belt distance may lie in the range of 0,5 cm to 5 cm. The first and the second belt may be driven with an identical belt speed, e.g. by means of a common driving cylinder.

The conveying direction changer comprises a rotatable leg or rotatable post, the leg or post being arranged between the first and the second belt. The leg may have a width smaller than the given belt distance. The leg when rotating is adapted to change the conveying direction of a sample tube placed on top of the leg. The leg when rotating also rotates the sample tube placed on the belts. In a non-active state of the leg, the leg may be placed at a level under the conveying level defined by the belts.

The conveying direction changer may be adapted to rotate the leg with a predetermined rotating speed profile. At the beginning, i.e. at angles smaller than or equal to zero angular degrees relative to horizontal (leg parallel to the conveying direction), the leg may have a rotating speed of 30 revolutions per minute (rpm). This relatively low rotating speed prevents that the sample tube is kicked off by the leg when the leg initially gets in contact with the sample tube. Between zero angular degrees and approximately 40 angular degrees the rotating speed may be increased up to 75 rpm. Between 41 angular degrees and 100 angular degrees the rotating speed may be kept constant at 75 rpm. Between 101 angular degrees and approximately 135 angular degrees the rotating speed may be reduced to zero rpm. The leg is then rotated back to an initial position at e.g. -120 angular degrees starting with 60 rpm, accelerating to 150 rpm and slowing down to 0 rpm. This rotating speed profile ensures a safe yet fast rotating of the sample tube.

The sample tube rack inserter may comprise a pushing means adapted to apply a push force to a sample tube, e.g. to a cap of the sample tube, to be inserted into a sample tube rack. The pushing means may be adapted to perform a vertical movement. The pushing means may e.g. be incorporated as a motor actuated plunger or piston, the plunger pushing or pressing the sample tube into the sample tube rack or sample puck.

The pushing means may be adapted to apply a predetermined push force profile to the sample tube. At the beginning, a maximum push force (largest available push force) may be applied to the sample tube. After reaching a first insertion position, the push force may be reduced by 50 % to 100 %. The first insertion position may be reached if 90 % to 98 % of a complete insertion path of the sample tube into the sample tube rack is reached. After that, 80 % to 95 % of the maximum push force may be applied to the sample tube until a final insertion position is reached. The final insertion position may be mechanically defined, e.g. by form fit between the sample tube and the sample tube rack. This push force profile causes a smooth yet safe insertion process.

The sample tube rack inserter may comprise a feed hopper or funnel. The hopper receives sample tubes from the second conveyor and centers the received sample tubes with respect to a dedicated opening of sample tube rack. The pushing means or plunger may apply the push force to the sample tube after the sample tube is centered by the hopper. The pushing means or plunger may be inserted into or penetrate the hopper during an insertion operation.

The hopper may be movable in a horizontal and/or vertical direction.

The hopper may have a vertical opening. The hopper may e.g. be closed only on three vertical sides. The vertical opening enables a movement of the hopper in a horizontal direction after the sample tube is inserted into the sample tube rack. If the sample tube is closed by means of a cap having a diameter larger than a diameter of the sample tube, a vertical up movement of the hopper may unintentionally remove the sample tube from sample tube rack, if a filling opening of the hopper has a diameter smaller than the diameter of the cap.

The sample tube rack inserter may comprise a sloped guiding means being arranged between the second conveyor and the hopper. The sloped guiding means is sloped such that sample tubes provided by the second conveyor move towards the hopper by gravitational force.

The sample tube rack may have two or more openings being horizontally spaced for inserting corresponding sample tubes. The second conveyor, the sample tube rack inserter, and/or the pushing means may be respectively adapted to be horizontally moved relative to the sample tube rack, such that a sample tube may be inserted into a corresponding opening of the sample tube rack without needing to move the sample tube rack. Alternatively, the rack can be moved and the second conveyor, the sample tube rack inserter and/or the pushing means can remain stationary. For example, where the sample tube rack is replaced with a sample puck that can be directly moved away toward other components of an analytical system by a conveying means.

The first and the second conveyor may have same or different vertical levels.

The sample tube buffer may comprise a sloped storage plane. The first conveyor may be adapted to provide sample tubes to the storage plane. The storage plane may be sloped such that sample tubes provided by the first conveyor move towards a defined conveying position by gravitational force. The storage plane may be geometrically dimensioned to store a given number of sample tubes.

The sample tube buffer may comprise a vertical conveyor, the vertical conveyor being adapted to sequentially load single sample tubes from the conveying position, to convey the loaded sample tubes in a vertical direction, and to sequentially provide the loaded sample tubes to the second conveyor at the defined sample tube rate. The vertical conveyor functions as a sample tube elevator supplying sample tubes at a defined sample tube rate.

The sample tube buffer may be adapted to monitor a number of sample tubes placed on the storage plane, i.e. a filling level of its buffer. This may e.g. be done by means of a suitable sensor, e.g. a light barrier, etc. The sample tube buffer may signal to the sample tube individualizer and to the first conveyor if more than a given threshold value of sample tubes are placed on the storage plane, such that the sample tube individualizer and the first conveyor stop operating if the buffer is full.

Since the sample tube tray stores the sample tubes in bulk commodity, the sample tube individualizer may not be able to unload a corresponding sample tube in every unloading step. Therefore, the sample tube individualizer typically provides sample tubes at an unpredictable sample tube rate but having an average which is typically constant. If this average is larger than an average of sample tubes supplied to the second conveyor by the sample tube buffer, it is possible to supply the sample tubes to the second conveyor at a fixed rate. If the buffer is full, the supply to the buffer is temporarily stopped until a lower buffer threshold value is reached. This simplifies the processing and enhances the processing performance.

The sample tube individualizer may comprise a vertical chain conveyor having a number of chain members, each chain member being adapted to unload single sample tubes from the sample tube tray and to provide the unloaded sample tubes to the first conveyor.

The laboratory (automation) system comprises at least one laboratory station. The laboratory stations may be pre-analytical, analytical and/or post-analytical stations, processing sample tubes and/or samples contained in the sample tubes. The laboratory stations may operate sample tube rack based, i.e. sample tubes are provided to the laboratory stations comprised in sample tube racks.

The laboratory (automation) system further comprises an apparatus for handling sample tubes as described above. The apparatus forms the front end of the laboratory (automation) system. The sample tubes can be provided in a completely unsorted bulk commodity. The sample tubes may just be dumped into the sample tube tray, wherein the apparatus provides filled sample tube racks for further processing by the laboratory stations.

The Method for handling sample tubes comprises the steps: storing sample tubes in bulk commodity in a sample tube tray, sequentially unloading single sample tubes from the sample tube tray at a non-constant sample tube rate by means of the sample tube individualizer, buffering the unloaded sample tubes by means of the sample tube buffer, and sequentially inserting the buffered sample tubes into a sample tube rack at a predeterminable, especially constant, sample tube rate, by means of the sample tube rack inserter.

A number of sample tubes being actually buffered may be monitored, and if more than a given threshold value of sample tubes are actually being buffered, the step of sequentially unloading single sample tubes from the sample tube tray may be paused or stopped until a lower buffer threshold value is reached.

The invention will now be described in detail with respect to the figures. The figures schematically show:
- Fig. 1: an apparatus for handling sample tubes from a first perspective,
- Fig. 2: the apparatus for handling sample tubes from a further perspective,
- Fig. 3: the apparatus for handling sample tubes from a further perspective,
- Fig.4: a conveying direction changer of the apparatus depicted in figures 1 to 3, and
- Fig. 5: a feeding hopper of the apparatus depicted in figures 1 to 3.

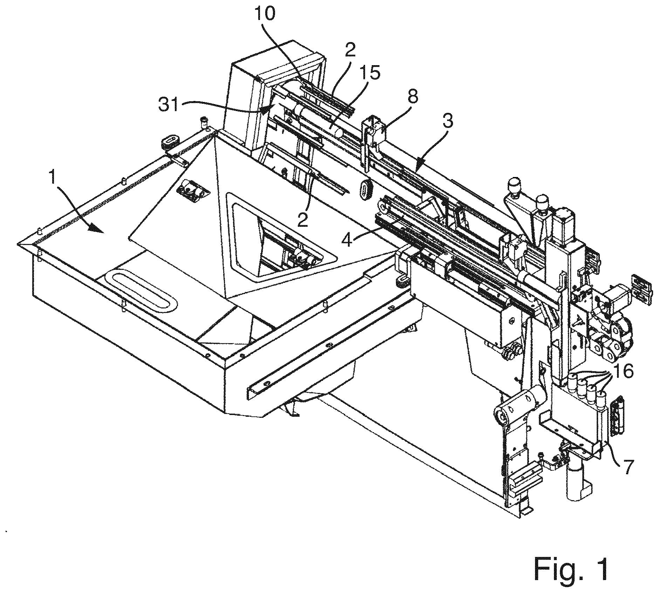

Fig. 1 shows an apparatus for handling sample tubes 15 from a first perspective.

As depicted in fig. 1, the apparatus comprises a sample tube tray 1. The sample tube tray 1 is adapted to store sample tubes 15 in bulk commodity. The sample tube tray 1 forms a well, wherein the sample tubes 15 intended for processing are dumped into the sample tube tray 1 in an unordered fashion. The sample tube tray 1 is dimensioned to store a few hundred sample tubes 15.

The sample tube tray 1 may be covered by a removable or pivotable coverage (not shown).

The apparatus further comprises a sample tube individualizer in the form of a vertical chain conveyor having a number of chain members 2. Each chain member 2 is adapted to unload a single sample tube 15 from the bottom of the sample tube tray 1 and to provide the unloaded sample tube 15 to a first belt conveyor 3.

The chain members 2 are attached to a chain 10. The chain 10 is guided and driven by two gear wheels, wherein only an upper gear wheel 31 is shown. The upper gear wheel 31 rotates around a horizontal axis lying in a conveying direction of the first conveyor 3. When the chain 10 rotates around the upper gear wheel 31 the corresponding chain members 2 rotate around a horizontal axis such that the sample tubes 15 are dumped of the chain members 2 and fall on the first conveyor 3.

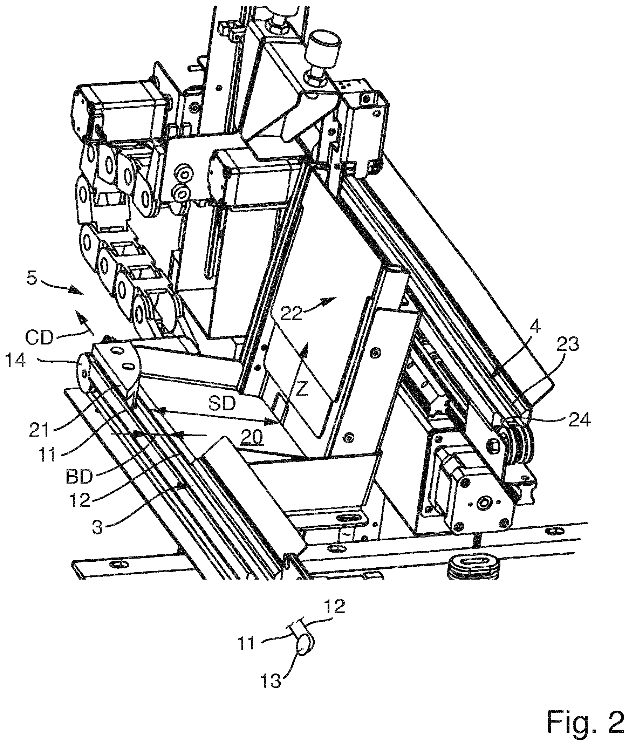

The first conveyor 3 comprises a first rubber band or belt 11 (see Fig. 2) and a second rubber band or belt 12 (see Fig. 2), the first and the second belt 11 and 12 extending in parallel along a conveying direction CD and being spaced by a given belt distance BD. The belt distance BD is chosen smaller than a diameter of processed sample tubes 15.

The first and the second belt 11 and 12 are driven by rolls 13 and 14 and have an identical conveying speed.

The sample tubes 15 are closed by means of caps 16. Due to the properties of the sample tube individualizer 2 it is not possible to provide the sample tubes 15 to the first conveyer 3 such that the sample tubes have a given conveying direction, i.e. cap first or cap last.

Since further processing steps require that the sample tubes are provided cap last, the apparatus comprises a conveying direction determiner 8, adapted to determine the conveying direction of a respective sample tube 15, and a conveying direction changer 9 functionally coupled to the conveying direction determiner 8 and the first conveyor 3, wherein the conveying direction changer 9 is adapted to change the conveying direction such that each sample tube is provided to a sample tube buffer 5 cap last.

In one embodiment, the conveying direction determiner 8 samples a height profile of a conveyed sample tube 15. Typically, caps 16 have a larger diameter than sample tubes 15. Thus, if a sample tube 15 closed by a cap 16 is conveyed cap first, the sampled height decreases if the cap has passed the conveying direction determiner 8. If a sample tube 15 is conveyed cap last, the sampled height increases as soon as the cap passes the conveying direction determiner 8. Thus, by analyzing the height profile, the conveying direction determiner 8 is able to determine the conveying direction.

In other embodiments, the conveying direction determiner 8 may comprise a camera and image processing means to determine the conveying direction. Image processing may be useful if the cap 16 has basically the same diameter than the sample tube 15.

The conveying direction determiner 8 and the conveying direction changer 9 are functionally coupled. If the conveying direction determiner 8 determines a "wrong" conveying direction, the conveying direction changer 9 is signalled by the conveying direction determiner 8 to change the conveying direction. The time point of signaling is chosen such that the corresponding sample tube 15 is within an operating range of the conveying direction changer 9.

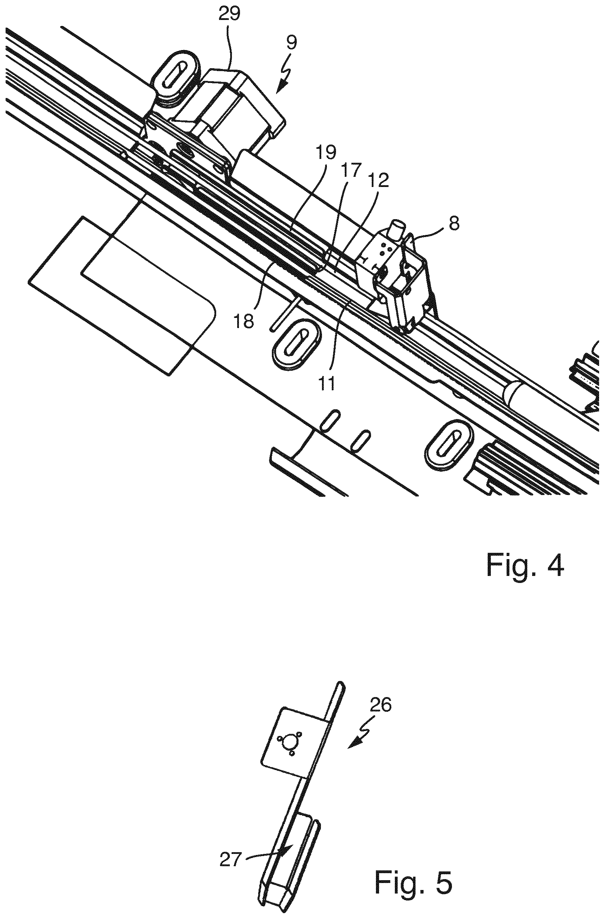

The conveying direction changer 9 comprises a rotatable central leg 17, the central leg 17 (see Fig. 4) being arranged between the first and the second belt 11 and 12, the central leg 17 having a width smaller than the given belt distance BD, and the central leg 17 when rotating changing the conveying direction of a sample tube 15 placed on top of the central leg 17. Adjacent to the central leg 17 two supporting legs 18 and 19 are arranged, the supporting legs 18 and 19 supporting a sample tube 15 in a rotating operation.

The legs 17 to 18 are respectively rotated by means of a stepper motor 29.

The legs 17 to 19 are rotated from an initial position back to the initial position with an angle speed profile "slow, accelerating from slow to fast, constant fast, slowing down to zero, reverse" during a direction changing operation.

Due to the direction changing operation, if necessary, the sample tubes 15 are respectively provided to the buffer 5 in a unified conveying direction.

The buffer 5 comprises a sloped storage or buffer plane 20. The sample tubes 15 provided by the first conveyor 3 are wiped of the first conveyor by means of a deflector 21 and directed to storage plane 20. The storage plane is sloped such that sample tubes provided by the first conveyor 3 move towards a conveying position by gravitational force. The storage plane 20 may e.g. be sloped by 5 to 15 angular degrees relative to horizontal.

The storage plane 20 has a depth SD chosen such that approximately 10 sample tubes 15 can be placed on the storage plane. In other words, the storage plane has a buffer capacity of approximately 10 sample tubes 15.

The buffer 5 further comprises a vertical conveyor 22, the vertical conveyor 22 being adapted to sequentially load single sample tubes 15 from the conveying position, to convey the loaded sample tubes 15 in a vertical direction Z, and to sequentially provide the loaded sample tubes 15 to the second conveyor 4 at a given sample tube rate, e.g. 10 to 200 sample tubes per minute.

The buffer 5 monitors its buffer level by means of a suitable sensor, e.g. a light barrier, a pressure sensor, a camera, a switch having a switching state depending of the buffer level, etc. The buffer 5 causes the sample tube individualizer 2 and the first conveyor 3 to stop, if the buffer level exceeds a given upper threshold. If the buffer level falls below a given lower threshold, the sample tube individualizer 2 and the first conveyor 3 are reactivated and continue to provide sample tubes 15 to the buffer 5.

The second conveyor 4, like the first conveyor 3, is formed of two rubber belts 23 and 24.

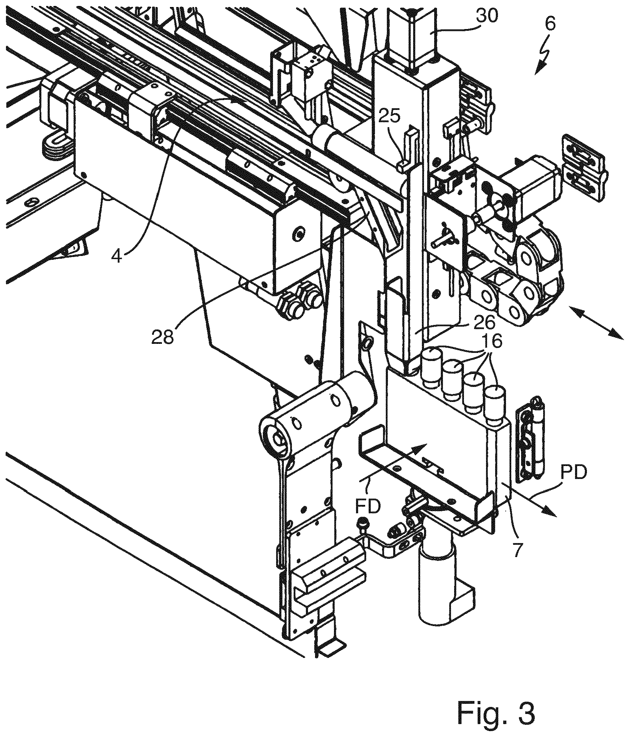

The second conveyor provides the sample tubes 15 to a sample tube rack inserter 6, see fig. 3. The sample tube rack inserter 6 is adapted to insert the sample tubes 15 into a sample tube rack 7.

The sample tube rack inserter 6 comprises a vertically movable pushing means 25 adapted to apply a push force to a cap 16 of a sample tube 15 to be inserted into a corresponding opening of the sample tube rack 7. The pushing means 25 is driven by a stepper motor 30, wherein the pushing means 25 and the stepper motor 30 are mechanically coupled by means of a shaft (not shown).

The pushing means 25 is adapted to apply a push force profile to a sample tube 15. At the beginning, a maximum push force is be applied to the sample tube 15. After reaching 95 % of a final insertion position, the push force is reduced by 100 % (i.e. no push force) for 0,1 seconds. Then 95 % of the maximum push force is applied to the sample tube 15 until the final insertion position defined by form fit between the sample tube 15 and the sample tube rack 7 is reached.

The sample tube rack inserter 6 comprises a filling hopper 26 having a vertical opening 27 (see Fig. 5). The hopper 26 is adapted to receive sample tubes 15 from the second conveyor 4 and is adapted to center the sample tubes 15 with respect to a dedicated opening of sample tube rack 7.

The sample tube rack inserter 6 further comprises a sloped guiding means 28 being arranged between the second conveyor 4 and the hopper 26. The sloped guiding means 28 is sloped such that sample tubes 15 provided by the second conveyor 4 move towards the hopper 26 by gravitational force.

The second conveyor 4 and the sample tube rack inserter 6 are respectively adapted to be horizontally moved relative to the sample tube rack 7, such that a sample tube 15 is inserted into a corresponding opening of the sample tube rack 7 without needing to move the sample tube rack 7.

The sample tube racks 7 are manually or automatically provided from a filling direction FD. After being filled the sample tube racks 7 are automatically moved in a processing direction PD rectangular to the filing direction FD.

The apparatus for handling sample tubes is part of a laboratory (automation) system and forms the front end of the laboratory system. The laboratory system further comprises laboratory stations, e.g. decapping stations, aliquot stations, bar code readers, etc.

The sample tubes 15 can be provided in a completely unsorted bulk commodity. The sample tubes 15 may just be dumped into the sample tube tray 1. The apparatus efficiently fills the unsorted sample tubes 15 into the sample tube racks 7, such that the laboratory stations may operate rack based.

The apparatus is highly flexible and offers a high processing performance.

## Claims

1. Apparatus for handling sample tubes (15), comprising:
- a sample tube tray (1),
- a sample tube individualizer (2),
- a first conveyor (3),
- a second conveyor (4),
- a sample tube buffer (5),
- a sample tube rack inserter (6), wherein
- the sample tube tray (1) is adapted to store sample tubes (15) in bulk commodity,
- the sample tube individualizer (2) is adapted to sequentially unload single sample tubes (15) from the sample tube tray (1) and to sequentially provide the unloaded sample tubes (15) to the first conveyor (3),
- the first conveyor (3) is adapted to convey the sample tubes (15) to the sample tube buffer (5), wherein the sample tubes (15) are closed by means of caps (16), wherein the sample tubes (15) are provided to the first conveyer (3) such that the sample tubes (15) are initially conveyed in a random conveying direction, the random conveying direction being either cap first or cap last,
- the sample tube buffer (5) is adapted to buffer the sample tubes (15) provided by the first conveyor (3) and to provide buffered sample tubes (15) to the second conveyor (4) with a predeterminable, especially constant, sample tube rate,
- the second conveyor (4) is adapted to convey the sample tubes (15) to the sample tube rack inserter (6), and
- the sample tube rack inserter (6) is adapted to insert the sample tubes (15) into a sample tube rack (7) said apparatus further comprising
- a conveying direction determiner (8), adapted to determine the conveying direction of a respective sample tube (15), and
- a conveying direction changer (9) functionally coupled to the conveying direction determiner (8) and the first conveyor (3), wherein the conveying direction changer (9) is adapted to change the conveying direction such that each sample tube (15) is provided to the sample tube buffer (5) in a defined conveying direction,
said apparatus being further **characterized in that**
- the first conveyor (3) comprises a first and a second belt (11, 12), the first and the second belt (11, 12) extending in parallel along a conveying direction (CD) and being spaced by a given belt distance (BD),
and **in that**
- the conveying direction changer (9) comprises a rotatable leg (17), the leg (17) being arranged between the first and the second belt (11, 12), the leg (17) having a width smaller than the given belt distance (BD), and the leg (17) when rotating changing the conveying direction of a sample tube (15) placed on top of the leg (17).

2. Apparatus according to claim 1, wherein
- the conveying direction changer (9) is adapted to rotate the leg (17) with a predetermined rotating speed profile.

3. Apparatus according to claim 1 or 2, wherein
- the sample tube rack inserter (6) comprises a pushing means (25) adapted to apply a push force to a sample tube (15) to be inserted into a sample tube rack (7).

4. Apparatus according to claim 3, wherein
- the pushing means (25) is adapted to apply a predetermined push force profile to the sample tube (15) to be inserted into the sample tube rack (7).

5. Apparatus according to anyone of the preceding claims, wherein
- the sample tube rack inserter (6) comprises a hopper (26) adapted to receive sample tubes (15) from the second conveyor (4) and adapted to center the sample tubes (15) with respect to a dedicated opening of sample tube rack (7).

6. Apparatus according to claim 5, wherein the sample tube rack inserter (6) comprises
- a sloped guiding means (28) being arranged between the second conveyor (4) and the hopper (26), wherein the sloped guiding means (28) is sloped such that sample tubes (15) provided by the second conveyor (4) move towards the hopper (26) by gravitational force.

7. Apparatus according to anyone of the preceding claims, wherein
- the sample tube rack (7) has two or more openings being horizontally spaced for inserting corresponding sample tubes (15), and
- the second conveyor (4) and the sample tube rack inserter (6) are respectively adapted to be horizontally moved relative to the sample tube rack (7), such that a sample tube (15) is inserted into a corresponding opening of the sample tube rack (7).

8. Apparatus according to anyone of the preceding claims, wherein
- the sample tube buffer (5) is adapted to monitor a number of sample tubes (15) being actually buffered and to signal to the sample tube individualizer (2) and to the first conveyor (3) if more than a given threshold value of sample tubes (15) are actually being buffered, such that the sample tube individualizer (2) and the first conveyor (3) stop operating.

9. Apparatus according to anyone of the preceding claims, wherein
- the first and the second conveyor (3, 4) have different vertical levels, wherein the sample tube buffer (5) comprises:
- a sloped storage plane (20), the first conveyor (3) adapted to provide sample tubes (15) to the storage plane (20), the storage plane (20) being sloped such that sample tubes (15) provided by the first conveyor (3) move towards a conveying position by gravitational force, the storage plane (20) being geometrically dimensioned to store a given number of sample tubes (15), and
- a vertical conveyor (22), the vertical conveyor (22) being adapted to sequentially load single sample tubes (15) from the conveying position, to convey the loaded sample tubes (15) in a vertical direction (Z), and to sequentially provide the loaded sample tubes (15) to the second conveyor (4) at the sample tube rate.

10. Apparatus according to anyone of the preceding claims, wherein
- the sample tube individualizer comprises a vertical chain conveyor having a number of chain members (2), each chain member (2) being adapted to unload single sample tubes (15) from the sample tube tray (1) and to provide the unloaded sample tubes to the first conveyor (3).

11. Laboratory system (100), comprising:
- at least one laboratory station, preferably a pre-analytical, an analytical and/or a post-analytical station, processing sample tubes (15) and/or samples contained in the sample tubes (15), and
- an apparatus according to anyone of the preceding claims.

12. Method for handling sample tubes (15) using an apparatus according to anyone of claims 1 to 10, comprising the steps:
- storing sample tubes (15) in bulk commodity in the sample tube tray (1),
- sequentially unloading single sample tubes (15) from the sample tube tray (1) at a non-constant sample tube rate by means of the sample tube individualizer (2),
- buffering the unloaded sample tubes (15) by means of the sample tube buffer (5), and
- sequentially inserting the buffered sample tubes (15) into a sample tube rack (7) at a predeterminable, especially constant, sample tube rate by means of the sample tube rack inserter (6).

13. Method according to claim 12, comprising the steps:
- monitoring a number of sample tubes (15) being actually buffered, and if more than a given threshold value of sample tubes (15) are actually being buffered, pausing the step of sequentially unloading single sample tubes (15) from the sample tube tray (1) until a lower buffer threshold value is reached.

## Patentansprüche

1. Vorrichtung zur Handhabung von Probenröhrchen (15), umfassend:
- ein Probenröhrchenfach (1),
- eine Probenröhrchen-Individualisierungseinrichtung (2),
- eine erste Fördereinrichtung (3),
- eine zweite Fördereinrichtung (4),
- eine Probenröhrchen-Puffereinrichtung (5),
- eine Probenröhrchenhalter-Einsetzeinrichtung (6), wobei
- das Probenröhrchenfach (1) dazu ausgebildet ist, dass es Probenröhrchen (15) in loser Gruppierung vorhält,
- die Probenröhrchen-Individualisierungseinrichtung (2) dazu ausgebildet ist, dass sie einzelne Probenröhrchen (15) aus dem Probenröhrchenfach (1) sequentiell entnimmt und die entnommenen Probenröhrchen (15) der ersten Fördereinrichtung (3) sequentiell bereitstellt,
- die erste Fördereinrichtung (3) dazu ausgebildet ist, dass sie die Probenröhrchen (15) zur Probenröhrchen-Puffereinrichtung (5) befördert, wobei die Probenröhrchen (15) mit Deckeln (16) verschlossen sind, wobei die Probenröhrchen (15) der ersten Fördereinrichtung (3) so bereitgestellt werden, dass die Probenröhrchen (15) zunächst in einer zufälligen Förderrichtung befördert werden, wobei in der zufälligen Förderrichtung entweder der Deckel zuerst oder der Deckel zuletzt vorliegt,
- die Probenröhrchen-Puffereinrichtung (5) dazu ausgebildet ist, dass sie die von der ersten Fördereinrichtung (3) bereitgestellten Probenröhrchen (15) puffert und die gepufferten Probenröhrchen (15) mit einer vorgebbaren, insbesondere konstanten, Probenröhrchentaktrate der zweiten Fördereinrichtung (4) bereitstellt,
- die zweite Fördereinrichtung (4) dazu ausgebildet ist, dass sie die Probenröhrchen (15) zur Probenröhrchenhalter-Einsetzeinrichtung (6) befördert, und
- die Probenröhrchenhalter-Einsetzeinrichtung (6) dazu ausgebildet ist, dass sie die Probenröhrchen (15) in einen Probenröhrchenhalter (7) einsetzt,
wobei die Vorrichtung weiter umfasst:
- eine Förderrichtung-Bestimmungseinrichtung (8), die dazu ausgebildet ist, dass sie die Förderrichtung eines jeweiligen Probenröhrchens (15) bestimmt, und
- eine Förderrichtung-Wechseleinrichtung (9), die funktional mit der Förderrichtung-Bestimmungseinrichtung (8) und der ersten Fördereinrichtung (3) gekoppelt ist, wobei die Förderrichtung-Wechseleinrichtung (9) dazu ausgebildet ist, dass sie die Förderrichtung derart ändert, dass jedes Probenröhrchen (15) in einer definierten Förderrichtung der Probenröhrchen-Puffereinrichtung (5) bereitgestellt wird,
wobei die Vorrichtung weiter **dadurch gekennzeichnet ist, dass**
- die erste Fördereinrichtung (3) ein erstes und ein zweites Band (11, 12) umfasst, wobei sich das erste und das zweite Band (11, 12) entlang einer Förderrichtung (CD) parallel erstrecken und durch einen gegebenen Bandabstand (BD) voneinander beabstandet sind,
und dadurch, dass
- die Förderrichtung-Wechseleinrichtung (9) einen drehbaren Abschnitt (17) umfasst, wobei der Abschnitt (17) zwischen dem ersten und dem zweiten Band (11, 12) angeordnet ist, wobei der Abschnitt (17) eine Breite aufweist, die geringer ist als der gegebene Bandabstand (BD), und der Abschnitt (17) unter Drehung die Förderrichtung eines oben auf dem Abschnitt (17) platzierten Probenröhrchens (15) ändert.

2. Vorrichtung nach Anspruch 1, bei der
- die Förderrichtung-Wechseleinrichtung (9) dazu ausgebildet ist, dass sie den Abschnitt (17) mit einem vorgegebenen Drehgeschwindigkeitsprofil dreht.

3. Vorrichtung nach Anspruch 1 oder 2, bei der
- die Probenröhrchenhalter-Einsetzeinrichtung (6) ein Schiebemittel (25) umfasst, das dazu ausgebildet ist, dass es eine Schubkraft auf ein Probenröhrchen (15) ausübt, das in einen Probenröhrchenhalter (7) einzusetzen ist.

4. Vorrichtung nach Anspruch 3, bei der
- das Schiebemittel (25) dazu ausgebildet ist, dass es ein vorgegebenes Schubkraftprofil auf das Probenröhrchen (15) ausübt, das in den Probenröhrchenhalter (7) einzusetzen ist.

5. Vorrichtung nach einem der vorhergehenden Ansprüche, bei der
- die Probenröhrchenhalter-Einsetzeinrichtung (6) einen Einführtrichter (26) umfasst, der dazu ausgebildet ist, dass er Probenröhrchen (15) von der zweiten Fördereinrichtung (4) erhält, und dazu ausgebildet ist, dass er die Probenröhrchen (15) auf eine zugeordnete Öffnung des Probenröhrchenhalters (7) zentriert.

6. Vorrichtung nach Anspruch 5, bei der die Probenröhrchenhalter-Einsetzeinrichtung (6) umfasst:
- ein schräges Führungsmittel (28), das zwischen der zweiten Fördereinrichtung (4) und dem Einführtrichter (26) angeordnet ist, wobei das schräge Führungsmittel (28) derart abgeschrägt ist, dass von der zweiten Fördereinrichtung (4) bereitgestellte Probenröhrchen (15) sich durch die Schwerkraft zum Einführtrichter (26) bewegen.

7. Vorrichtung nach einem der vorhergehenden Ansprüche, bei der
- der Probenröhrchenhalter (7) zum Einsetzen entsprechender Probenröhrchen (15) zwei oder mehr Öffnungen aufweist, die in horizontaler Richtung beabstandet sind, und
- die zweite Fördereinrichtung (4) und die Probenröhrchenhalter-Einsetzeinrichtung (6) jeweils dazu ausgebildet sind, dass sie relativ zum Probenröhrchenhalter (7) horizontal bewegbar sind, so dass ein Probenröhrchen (15) in eine entsprechende Öffnung des Probenröhrchenhalters (7) eingesetzt wird.

8. Vorrichtung nach einem der vorhergehenden Ansprüche, bei der
- die Probenröhrchen-Puffereinrichtung (5) dazu ausgebildet ist, dass sie eine Anzahl an Probenröhrchen (15) überwacht, die gegenwärtig gepuffert werden, und an die Probenröhrchen-Individualisierungseinrichtung (2) und die erste Fördereinrichtung (3) ein Signal gibt, wenn gegenwärtig mehr als ein gegebener Schwellenwert an Probenröhrchen (15) gepuffert werden, so dass die Probenröhrchen-Individualisierungseinrichtung (2) und die erste Fördereinrichtung (3) ihren Betrieb stoppen.

9. Vorrichtung nach einem der vorhergehenden Ansprüche, bei der
- die erste und die zweite Fördereinrichtung (3, 4) unterschiedliche vertikale Höhen aufweisen, wobei die Probenröhrchen-Puffereinrichtung (5) umfasst:
- eine schräge Ablageebene (20), wobei die erste Fördereinrichtung (3) dazu ausgebildet ist, dass sie der Ablageebene (20) Probenröhrchen (15) bereitstellt, wobei die Ablageebene (20) derart abgeschrägt ist, dass die von der ersten Fördereinrichtung (3) bereitgestellten Probenröhrchen (15) sich durch die Schwerkraft zu einer Förderposition bewegen, wobei die Ablageebene (20) geometrisch so bemessen ist, dass eine gegebene Anzahl an Probenröhrchen (15) vorgehalten wird, und
- eine vertikale Fördereinrichtung (22), wobei die vertikale Fördereinrichtung (22) dazu ausgebildet ist, dass sie sequentiell einzelne Probenröhrchen (15) aus der Förderposition aufnimmt, die aufgenommenen Probenröhrchen (15) in einer vertikalen Richtung (Z) befördert und die aufgenommenen Probenröhrchen (15) mit der Probenröhrchentaktrate sequentiell der zweiten Fördereinrichtung (4) bereitstellt.

10. Vorrichtung nach einem der vorhergehenden Ansprüche, bei der
- die Probenröhrchen-Individualisierungseinrichtung eine vertikale Kettenfördereinrichtung umfasst, die eine Anzahl an Kettenelementen (2) aufweist, wobei jedes Kettenelement (2) dazu ausgebildet ist, dass es einzelne Probenröhrchen (15) aus dem Probenröhrchenfach (1) entnimmt und die entnommenen Probenröhrchen der ersten Fördereinrichtung (3) bereitstellt.

11. Laborsystem (100), umfassend:
- mindestens eine Laborstation, bevorzugt eine Voranalyse-, Analyse- und/oder Nachanalysestation, die Probenröhrchen (15) und/oder in den Probenröhrchen (15) enthaltene Proben verarbeitet, und
- eine Vorrichtung nach einem der vorhergehenden Ansprüche.

12. Verfahren zur Handhabung von Probenröhrchen (15) unter Verwendung einer Vorrichtung nach einem der Ansprüche 1 bis 10, umfassend die Schritte:
- Vorhalten von Probenröhrchen (15) in loser Gruppierung im Probenröhrchenfach (1),
- sequentielles Entnehmen einzelner Probenröhrchen (15) aus dem Probenröhrchenfach (1) bei einer nicht konstanten P robenröhrchentaktrate mittels der Probenröhrchen-Individualisierungseinrichtung (2),
- Puffern der entnommenen Probenröhrchen (15) mittels der Probenröhrchen-Puffereinrichtung (5), und
- sequentielles Einsetzen der gepufferten Probenröhrchen (15) in einen Probenröhrchenhalter (7) bei einer vorgebbaren, insbesondere konstanten, Probenröhrchentaktrate mittels der Probenröhrchenhalter-Einsetzeinrichtung (6).

13. Verfahren nach Anspruch 12, umfassend die Schritte:
- Überwachen einer Anzahl an Probenröhrchen (15), die gegenwärtig gepuffert werden, und wenn gegenwärtig mehr als ein gegebener Schwellenwert an Probenröhrchen (15) gepuffert werden, Unterbrechen des Schritts zum sequentiellen Entnehmen einzelner Probenröhrchen (15) aus dem Probenröhrchenfach (1), bis ein niedrigerer Pufferschwellenwert erreicht ist.

## Revendications

1. Appareil pour manipuler des tubes d'échantillons (15), comprenant:
- un plateau de tubes d'échantillons (1),
- un individualiseur de tubes d'échantillons (2),
- un premier convoyeur (3),
- un second convoyeur (4),
- un accumulateur de tubes d'échantillons (5),
- un inséreur de magasin de tubes d'échantillons (6),
dans lequel:
- le plateau de tubes d'échantillons (1) est apte à stocker des tubes d'échantillons (15) dans un agencement en vrac,
- l'individualiseur de tubes d'échantillons (2) est apte à décharger de façon séquentielle des tubes d'échantillons individuels (15) du plateau de tubes d'échantillons (1) et à amener de façon séquentielle les tubes d'échantillons déchargés (15) au premier convoyeur (3),
- le premier convoyeur (3) est apte à transporter les tubes d'échantillons (15) jusqu'à l'accumulateur de tubes d'échantillons (5), dans lequel les tubes d'échantillons (15) sont fermés à l'aide de bouchons (16), dans lequel les tubes d'échantillons (15) sont amenés au premier convoyeur (3) de telle sorte que les tubes d'échantillons (15) soient initialement transportés dans une direction de transport aléatoire, la direction de transport aléatoire étant soit bouchon devant soit bouchon derrière,
- l'accumulateur de tubes d'échantillons (5) est apte à accumuler les tubes d'échantillons (15) amenés par le premier convoyeur (3) et à amener les tubes d'échantillons accumulés (15) au second convoyeur (4) à un débit de tubes d'échantillons prédéterminable, en particulier constant,
- le second convoyeur (4) est apte à transporter les tubes d'échantillons (15) jusqu'à l'inséreur de magasin de tubes d'échantillons (6), et
- l'inséreur de magasin de tubes d'échantillons (6) est apte à insérer les tubes d'échantillons (15) dans un magasin de tubes d'échantillons (7),
ledit appareil comprenant en outre:
- un détermineur de direction de transport (8) apte à déterminer la direction de transport d'un tube d'échantillon respectif (15), et
- un changeur de direction de transport (9) couplé de façon fonctionnelle au détermineur de direction de transport (8) et au premier convoyeur (3), dans lequel le changeur de direction de transport (9) est apte à changer la direction de transport de telle sorte que chaque tube d'échantillon (15) soit amené à l'accumulateur de tubes d'échantillons (5) dans une direction de transport définie,
ledit appareil étant en outre **caractérisé en ce que**:
- le premier convoyeur (3) comprend une première et une seconde courroies (11, 12), les première et seconde courroies (11, 12) s'étendant en parallèle le long d'une direction de transport (CD) et étant espacées d'une distance de courroie donnée (BD), et
- **en ce que** le changeur de direction de transport (9) comprend une branche rotative (17), la branche (17) étant agencée entre les première et seconde courroies (11, 12), la branche (17) présentant une largeur plus petite que la distance de courroie donnée (BD), et la branche (17), lorsqu'elle tourne, changeant la direction de transport d'un tube d'échantillon (15) placé au sommet de la branche (17).

2. Appareil selon la revendication 1, dans lequel:
- le changeur de direction de transport (9) est apte à faire tourner la branche (17) avec un profil de vitesse de rotation prédéterminé.

3. Appareil selon la revendication 1 ou 2, dans lequel:
- l'inséreur de magasin de tubes d'échantillons (6) comprend des moyens de poussée (25) aptes à appliquer une force de poussée à un tube d'échantillon (15) à insérer dans un magasin de tubes d'échantillons (7).

4. Appareil selon la revendication 3, dans lequel:
- les moyens de poussée (25) sont aptes à appliquer un profil de force de poussée prédéterminé au tube d'échantillon (15) à insérer dans le magasin de tubes d'échantillons (7).

5. Appareil selon l'une quelconque des revendications précédentes, dans lequel:
- l'inséreur de magasin de tubes d'échantillons (6) comprend une trémie (26) apte à recevoir des tubes d'échantillons (15) en provenance du second convoyeur (4) et apte à centrer les tubes d'échantillons (15) par rapport à une ouverture dédiée du magasin de tubes d'échantillons (7).

6. Appareil selon la revendication 5, dans lequel l'inséreur de magasin de tubes d'échantillons (6) comprend:
- des moyens de guidage inclinés (28) agencés entre le second convoyeur (4) et la trémie (26), dans lequel les moyens de guidage inclinés (28) sont inclinés de telle sorte que les tubes d'échantillons (15) amenés par le second convoyeur (4) se déplacent en direction de la trémie (26) sous l'effet de la force gravitationnelle.

7. Appareil selon l'une quelconque des revendications précédentes, dans lequel:
- le magasin de tubes d'échantillons (7) comporte deux ou plus de deux ouvertures espacées horizontalement pour insérer des tubes d'échantillons (15) correspondants; et
- le second convoyeur (4) et l'inséreur de magasin de tubes d'échantillons (6) sont respectivement aptes à être déplacés horizontalement par rapport au magasin de tubes d'échantillons (7), de telle sorte qu'un tube d'échantillon (15) soit inséré dans une ouverture correspondante du magasin de tubes d'échantillons (7).

8. Appareil selon l'une quelconque des revendications précédentes, dans lequel:
- l'accumulateur de tubes d'échantillons (5) est apte à surveiller un nombre de tubes d'échantillons (15) réellement accumulés et à signaler à l'individualiseur de tubes d'échantillons (2) et au premier convoyeur (3) si plus qu'une valeur de seuil donnée de tubes d'échantillons (15) sont réellement accumulés, de telle sorte que l'individualiseur de tubes d'échantillons (2) et le premier convoyeur (3) cessent de fonctionner.

9. Appareil selon l'une quelconque des revendications précédentes, dans lequel:
- les premier et second convoyeurs (3, 4) présentent des niveaux verticaux différents, dans lequel l'accumulateur de tubes d'échantillons (5) comprend:
- un plan de stockage incliné (20), le premier convoyeur (3) étant apte à amener des tubes d'échantillons (15) au plan de stockage (20), le plan de stockage (20) étant incliné de telle sorte que des tubes d'échantillons (15) amenés par le premier convoyeur (3) se déplacent en direction d'une position de transport sous l'effet de la force gravitationnelle, le plan de stockage (20) étant dimensionné géométriquement de manière à stocker un nombre donné de tubes d'échantillons (15), et
- un convoyeur vertical (22), le convoyeur vertical (22) étant apte à charger de façon séquentielle des tubes d'échantillons individuels (15) à partir de la position de transport, à transporter les tubes d'échantillons chargés (15) dans une direction verticale (Z), et à amener de façon séquentielle les tubes d'échantillons chargés (15) au second convoyeur (4) au débit de tubes d'échantillons.

10. Appareil selon l'une quelconque des revendications précédentes, dans lequel:
- l'individualiseur de tubes d'échantillons (2) comprend un convoyeur à chaîne vertical comprenant un certain nombre d'éléments de chaîne (2), chaque élément de chaîne (2) étant apte à décharger des tubes d'échantillons individuels (15) du plateau de tubes d'échantillons (1) et à amener les tubes d'échantillons déchargés au premier convoyeur (3).

11. Système de laboratoire (100), comprenant:
- au moins une station de laboratoire, de préférence une station pré-analytique, une station analytique et/ou une station post-analytique, traitant des tubes d'échantillons (15) et/ou des échantillons contenus dans les tubes d'échantillons (15), et
- un appareil selon l'une quelconque des revendications précédentes.

12. Procédé pour manipuler des tubes d'échantillons (15) en utilisant un appareil selon l'une quelconque des revendications 1 à 10, comprenant les étapes suivantes:
- stocker des tubes d'échantillons (15) en vrac dans le plateau de tubes d'échantillons (1),
- décharger de façon séquentielle des tubes d'échantillons individuels (15) du plateau de tubes d'échantillons (1) à un débit de tubes d'échantillons non constant à l'aide de l'individualiseur de tubes d'échantillons (2),
- accumuler les tubes d'échantillons déchargés (15) à l'aide de l'accumulateur de tubes d'échantillons (5), et
- insérer de façon séquentielle les tubes d'échantillons accumulés (15) dans un magasin de tubes d'échantillons (7) à un débit de tubes d'échantillons prédéterminable, en particulier constant, à l'aide de l'inséreur de magasin de tubes d'échantillons (6).

13. Procédé selon la revendication 12, comprenant les étapes suivantes:
- surveiller un certain nombre de tubes d'échantillons (15) réellement accumulés, et si plus qu'une valeur de seuil donnée de tubes d'échantillons (15) sont réellement accumulés, arrêter l'étape de déchargement séquentiel de tubes d'échantillons individuels (15) du plateau de tubes d'échantillons (1) jusqu'à ce qu'une valeur de seuil d'accumulateur inférieure soit atteinte.
